(19) Europäisches Patentamt
European Patent Office
Office européen des brevets

(11) **EP 3 139 725 B1**

(12) **EUROPEAN PATENT SPECIFICATION**

(45) Date of publication and mention
of the grant of the patent:
**06.06.2018 Bulletin 2018/23**

(21) Application number: **15724170.4**

(22) Date of filing: **08.05.2015**

(51) Int Cl.:
**A01C 7/20** (2006.01)

(86) International application number:
**PCT/DK2015/050119**

(87) International publication number:
**WO 2015/169323 (12.11.2015 Gazette 2015/45)**

(54) **A SOWING APPARATUS FOR SENSOR BASED DEPTH CONTROL OF SEEDING**

SÄVORRICHTUNG FÜR SENSORBASIERTE TIEFENSTEUERUNG BEIM SÄEN

APPAREIL D'ENSEMENCEMENT PERMETTANT DE CONTRÔLER LA PROFONDEUR
D'ENSEMENCEMENT À L'AIDE D'UN CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2014 DK 201400255**

(43) Date of publication of application:
**15.03.2017 Bulletin 2017/11**

(73) Proprietor: **Agro Intelligence ApS
8200 Aarhus N (DK)**

(72) Inventors:
• **GREEN, Ole
DK-6940 Lem St. (DK)**
• **MARTIKAINEN, Esko
FI-23100 Mynämäki (FI)**
• **THOMASEN, Søren
DK-4700 Næstved (DK)**
• **NIELSEN, Søren Kirkegaard
8600 Silkeborg (DK)**

(74) Representative: **Rasmussen, Martin Hoffgaard et
al
Otello Law Firm
Skt. Clemens Torv 9, 1st floor
8000 Aarhus C (DK)**

(56) References cited:
**EP-A2- 0 177 024        WO-A1-2014/066654
US-A1- 2011 247 843**

## Description

## Field of the invention

The present invention relates generally to sowing technology in the field of agriculture. More specifically, the present invention relates in a first aspect to a sowing apparatus and in a second aspect to use of such a sowing apparatus for sowing seeds.

## Background of the invention

Within the field of agriculture, when culturing crops it is common practice to grow crops in vast areas of land for the purpose of harvesting desired parts of the crop or the whole crop itself. Due to the extremely large areas of land involved, it is preferred to use a sowing apparatus when sowing the crop seeds making the sowing process as efficient and as little time consuming as possible.

A prior art sowing apparatus is configured to be towed behind a tractor or the like, and it comprises a frame suspending on a couple of wheels. On the frame is pivotally suspended one or more shear carriers. The opposite end of each shear carrier is located near the ground and comprises a shear that during use at least is partially suspended into the soil. When towing the sowing apparatus the shears will each create a furrow in the soil, extending a relatively small distance into the soil. A seed conveyor is arranged in respect of each shear on the frame in such a way that the shear carrier allows dispensing seeds into the furrows created by the shears. By slightly angling the shears in relation to the direction of movement of the sowing apparatus, it is possible to make the shears create a furrow on the one hand, and on the other hand, immediately subsequent to dispensing and sowing a seed, to make the shears cover that furrow with soil. The covering of the furrow is made by either a second tine/share pushing soil into the furrow and/or compacting the furrow sides with a small wheel to compress soil into the furrow and make a light soil compaction around the seed to improve germination and water availability.

By burying the seeds it may be possible to establish optimum growth conditions for the seeds during the seeding stage due to the better accessibility of nutrients and water at a certain depth in the soil. Furthermore, losses of seeds to small foraging animals may be minimized and also losses due to blowing winds removing the seeds from the sowing site are avoided in this way as are detrimental effects of UV radiation originating from the sun.

Each species of crop has its own optimum conditions in relation to the initial seeding growth stage and thus also in relation to the sowing depth. Generally, the smaller the seed, the less depth of seeding desired. Furthermore, as a general rule, the smaller the seed, the more sensitive the seed will be in relation to deviations to the optimum seeding depth. Accordingly, optimum growth depth for wheat seeds is 2 - 6 cm; optimum growth depth for maize/com seeds is 7 - 8 cm; and optimum growth depth for rape seeds is 1.5 - 2.5 cm.

When sowing a crop seed, in case a relatively large part of the seeds is seeded in a non-optimum seeding depth, a non-optimum germination of the crop will result. Due to a lower germination rate, the result will be a weaker competition against weeds and poor utilization of nutrient per area unit.

Accordingly, it is of paramount importance for the farmer's economy that the seeds will be seeded at a seeding depth which is optimum for the specific plant species.

To this end, the prior art sowing apparatus is provided with a depth controlling device for attempting to secure that the seeds being seeded will be seeded at a depth which corresponds to the optimum seeing depth of the crop species in question. Such a depth controlling device comprises a spring load for spring loading the pivotally suspended shear carrier. In this way the shear carrier will not be freely movable in the pivotally suspension and it will not be rigidly suspended onto the frame of the sowing apparatus. Rather the pivotally suspended shear carriers will be pivotally suspended and forced into the soil be the force posed by the spring loading. The depth controlling device additionally comprises adjustment means for adjusting the tension of the spring, thus allowing the pivotally suspended shear carriers to be forced into the soil by a predetermined force as determined by the tension of the spring.

However, although this type of prior art sowing technology provides a somewhat improved technique for sowing the crop seeds in the soil at an approximate sowing depth compared to a non-suspension system, there exist a number of disadvantages associated with this technology.

One major disadvantage becomes apparent when using the prior art sowing apparatus in soil having a varying soil texture. Accordingly, when applying the prior art sowing apparatus in areas comprising parts of sandy soil and other parts of clayed soil, possible with areas of presence of rocks or gravel, the spring loaded shear carrier with its pre-adjusted spring tension will not be able to cope with these varying nature of soil constituents in the sense that the spring loaded shear carrier having a constant and predetermined spring tension when operating in sand, which is relatively soft, will imply that the shear will be pressed a relative deep distance into the soil, whereas when operating in clayed or rocky soil, which is relatively hard, the shear (having the same spring loading) will be pressed only a relative shallow distance into the soil.

The consequence is that the seeds are not being sown at constant depths irrespective of the nature of the soil. Hence, a non-optimum growth of crops will result.

Furthermore, as the spring load is also calibrated to a specific speed and resulting soil resistance, if the speed is varying then also the seeding depth will vary, as the soil resistance will increase commensurate with increasing speed. Especially in the case of going up and down hill, the speed can easily vary 20-40 %.

Another type of depth controlling sowing machine relies on measuring the distance over ground by use of a sensor sensing the distance to the surface of the ground. The sensor may be a sonic or an optical sensor, such as an ultrasonic sensor or an IR sensor which is arranged on the sowing machine itself. In these machines the sowing depth is controlled by a control unit which regulates the sowing depth of the seeds to be sown by changing the depth of a shear submerged into the soil in response to the distance sensed by the senor.

Such a sowing machine is disclosed in EP 0 177 024 A2. EP 0 177 024 A2 discloses a sowing machine comprising a frame carrying a hopper containing seeds to be sown, A sensing transmitter and receiver is arranged immediately below the bottom of the frame and are configured to sense the distance from the bottom of the frame to the surface of the ground. Based on this information the seeding depth is controlled by actuators which pivotally move arms carrying the seeding shears.

Although these machines in theory could provide for a precise sowing depths of seeds, these machines in practice suffers from some drawbacks.

These drawbacks relate to the fact that optical and sonic sensing in general will be inaccurate and provide false reading due to temperature variation, presence of moist in the air, presence of crop residues or weed at the soil surface. Also presence of small areas of water surfaces at the upper layer of the soil may pose false readings by the sensor. Accordingly, complicated computing and noise filtering will be needed in the processing of the data originating from optical and sonic sensing.

Moreover, irregular surfaces of the field may present challenges in relation to providing the correct feedback, viz. the depth of a shear submerged into the soil in response to the distance sensed by the senor.

Furthermore, dust and dirt depositing on the sensing surface of the sensor will require frequent cleaning of the sensors. Additionally, dust in the field of view might generate poor detection, impacting the sensing accuracy of optical sensing.

Finally, optical and sonic sensors are delicate equipment that needs careful maintenance in order to function properly.

Yet another apparatus for controlling the sowing depths of the seed is described in WO 2014/066654 A1. This document discloses a sowing apparatus comprising a frame carrying a hopper comprising seeds and a dispensing metering unit for controlling the amount of seed being dispensed. The frame is carried on a parallel arm arrangement the height of which is controlled by an actuator. Two gauge wheels are upon operation of the apparatus moved over the ground and a sensor senses the angular position of an arm carrying the two gauge wheels. Based on the sensed angular position that arm the seeding depth of the seeds is adjusted. The apparatus of WO 2014/066654 A1 is rather complicated in that it involves the mechanical system associated with the additional gauge wheels.

Another type of arrangement for making depths adjustment of an agricultural working implement is disclosed in US 2011/0247843 A1. US 2011/0247843 A1 discloses a device for working the soil in a specific depth. The device comprises a couple of clearing discs angled at an angle to each other. The clearing discs are connected to a height adjustment mechanism which is configured for vertically moving the clearing discs up or down. A sensor senses the vertical position of the clearing discs and based upon this information, the user working the soil may adjust the working depths of the clearing discs. The invention of US 2011/0247843 A1 is not particularly directed to sowing apparatuses.

Accordingly, a need persists for an improved sowing apparatus which will alleviate or even eliminate the above mentioned disadvantages.

## Brief description of the invention

The object of the present invention is to alleviate or even eliminate the above mentioned disadvantages of the prior art sowing apparatus.

The object of the present invention is achieved by a sowing apparatus according to claim land by the use of such a sowing apparatus according to claim 15. Preferred embodiments of the invention are defined in the dependent claims 2 - 14. Accordingly, the present invention relates in a first aspect to a sowing apparatus, said sowing apparatus comprises:

a frame comprising a front end and a rear end, as seen in relation of the intended direction of movement; said intended direction of movement defining a longitudinal direction X of the apparatus; wherein said frame is having an extension in a transverse direction Y, said transverse direction being perpendicular to the longitudinal direction X.

said frame comprising one or more shear carriers, said shear carriers each having a first end and a second end;

said one or more shear carriers at its first end being pivotally suspended onto said frame in a suspension;

said shear carrier at its second end comprising one or more shears adapted to be at least partially submerged into the soil;

wherein in respect of one or more of said one or more shear carriers, said frame comprises seed conveying means for conveying seeds into the soil at a position corresponding to one or more of said one or more shears;

wherein in respect of one or more of said one or more shear carriers, said apparatus comprises a sensor for detecting the position of said shear carrier in relation to the frame; said sensor being configured to provide an output signal representing a sensed position of said shear carrier;

wherein in respect of one or more of said one or more shear carriers said apparatus comprises an actuator for altering the position of the shear carrier in relation to the frame;

wherein said apparatus comprises a control unit configured to receive said output signal from said sensor;

wherein said control unit is configured to provide an output signal for controlling said actuator;

wherein said control unit is connected to an input device, said input device being configured to allow an operator to provide said control unit with instruction relating to the desired response of the actuator, based the input signal of said sensor.

The present invention relates in a second aspect to use of a sowing apparatus according to the first aspect for sowing seeds.

The present invention in its first and second aspect provides for sowing crop seeds at a preferred optimum sowing depth, irrespective of the nature of the soil. Hence, more optimum growth of crops will result. The optimum sowing depth has the consequence that the crop will be more competitive against weeds and resistant towards attack from fungi in early stage and thus imply improved yield of crops. Furthermore, when sowed at an optimum depth, the crop will be more robust towards variations in weather condition.

**Brief description of the figures**

Fig. 1 illustrates schematically the principles of a prior art sowing apparatus.

Fig. 2 illustrates schematically the principles of a sowing apparatus according to the present invention.

Fig. 3 illustrates schematically the trigonometry involved in one embodiment of the present invention.

**Detailed description of the invention**

The first aspect of the present invention

The present invention relates in a first aspect to a sowing apparatus 100, said sowing apparatus comprises:

a frame 2 comprising a front end 4 and a rear end 6, as seen in relation of the intended direction of movement; said intended direction of movement defining a longitudinal direction X of the apparatus; wherein said frame is having an extension in a transverse direction Y, said transverse direction being perpendicular to the longitudinal direction X; wherein said frame comprising one or more shear carriers 8, said shear carriers each having a first end 10 and a second end 12; wherein said one or more shear carriers 8 at its first end being pivotally suspended onto said frame in a suspension 14; wherein said shear carrier at its second end 12 comprising one or more shears 16 adapted to be at least partially submerged into the soil 1 8; wherein in respect of one or more of said one or more shear carriers 8, said frame comprises seed conveying means 20 for conveying seeds into the soil at a position corresponding to one or more of said one or more shears; wherein in respect of one or more of said one or more shear carriers 8, said apparatus comprises a sensor 22 for detecting the position of said shear carrier in relation to the frame; said sensor 22 being configured to provide an output signal representing a sensed position of said shear carrier 8; wherein in respect of one or more of said one or more shear carriers said apparatus comprises an actuator 24 for altering the position of the shear carrier in relation to the frame; wherein said apparatus comprises a control unit 26 configured to receive said output signal from said sensor; wherein said control unit is configured to provide an output signal for controlling said actuator; wherein said control unit is connected to an input device 28, said input device being configured to allow an operator to provide said control unit with instruction relating to the desired response of the actuator, based the input signal of said sensor.

In the present description and in the appended claims, the term "intended direction of movement" shall be construed to mean "the direction of movement of the sowing apparatus when used for sowing", wherein the shears are usually positioned at a relatively rear position.
In the present description and in the appended claims, the term "the position of the shear carrier in relation to the frame" shall be construed to mean "the position of the shear carrier, in a vertical direction, in relation to the frame".
In one embodiment of the first aspect of the present invention, in respect of one or more of said one or more shear carriers 8, said seed conveying means 20

for conveying seeds into the soil at a position corresponding to one or more of said one or more shears comprises a tube or pipe 21 having an extension in a vertical direction from an inlet opening 28 thereof to an outlet opening 30 thereof, said outlet opening 30 being arranged below said inlet opening 28.

In one embodiment of the first aspect of the present invention, in respect of one or more of said one or more shear carriers 8, said seed conveying means 20 for conveying seeds into the soil at a position corresponding to one or more of said one or more shears are configured to conveying seeds into the soil at a position corresponding to a rear part 32 of one or more of said one or more shears

Such arrangements provide for a cost efficient and simple way of conveying seeds into the soil.

In one embodiment of the first aspect of the present invention in respect of one or more of said one or more shear carriers 8 said seed conveying means 20 for conveying seeds into the soil at a position corresponding to one or more of said one or more shears is connected to a seed dispensing device 34 for dispensing seeds at a predetermined intervals.

This ensures an automated dispensing of seeds into the soil and thus may provide an accurate and constant mutual distance of sown seeds.

In one embodiment of the first aspect of the present invention said frame 2 comprises one or more wheels or carrier rollers 36 for providing support for said frame when towing the apparatus.

Providing the sowing apparatus with wheels or carrier rollers ensures less resistance when towing the apparatus behind a tractor. Furthermore, this may provide more accurately seeding seeds at a predetermined sowing depth.

In one embodiment of the first aspect of the present invention said sensor 22 and said actuator 24 is an integrated unit 38.

Such an arrangement provides a more simple design of the sowing apparatus.

In one embodiment of the first aspect of the present invention said control unit 26 is configured to receive instructions relating to a desired basis-depth of sowing, thus corresponding to a desired basis-position of the actuator relative to the frame.

Hereby is ensured that when sowing seeds, the seeds will as far as possible be sown at this predetermined basis-depth of sowing.

In the present description and in the appended claims, the term "basis-depth" shall be construed to mean a desired and optimum sowing depth associated with the specific crop species to be grown. The actual sowing depth may undesirably deviate from this basis-depth due to various types of errors or difficult soil conditions. However, the basis-depth is the depth at which it is desired that the seeds are to be sown.

In one embodiment of the first aspect of the present invention said sensor 22 being a sensor configured to sense a translational displacement; or wherein said sensor 22 being a sensor configured to sense an angular displacement.

These two types of sensors both will provide accurate sensing of the movement of the shear carriers in relation to the frame.

In one embodiment of the first aspect of the present invention the number of shear carriers is 5 - 180, such as 10 - 175, such as 15 - 170, such as 20 - 165, such as 25 - 160, such as 30 - 155, such as 35 - 150, such as 40 - 145, such as 45 - 140, such as 50 - 135 or 55 - 130, such as 60 - 125, such as 65 - 120, such as 70 - 115, such as 75 - 110, such as 80 - 105, such as 85 - 100, such as 90 - 95.

Such numbers of shear carriers will provide for a fast and efficient sowing of crop seeds.

In one embodiment of the first aspect of the present invention, in respect of one or more of said one or more shear carriers said shear carrier may independently comprise one, two or three or more shears.

It may in certain cases not be necessary for each shear to have its own associated shear carrier. Providing one or more shear carriers with more shears provides for construction savings and a simpler design.

Likewise it may in certain cases not be necessary for each shear carrier to have its own associated actuator and/or have its own associated sensor. Accordingly, groups of two, three, four or more shear carriers, preferably shear carriers located in an immediate vicinity of each other, may be configured to forced synchronous movement, e.g. by being welded together, in a configuration where these groups of two, three, four or more shear carriers are sharing the same common actuator and/or the same common sensor.

Similarly, it is understood that within the meaning of the present description and the appended claims, the sowing apparatus of the first aspect of the present invention may one or more control units. Accordingly, one control unit may be configured to provide output signals for controlling all the actuators comprised in the sowing apparatus.

In one embodiment of the first aspect of the present invention the sowing apparatus being configured to be towed behind a tractor or the like.

In another embodiment of the first aspect of the present invention, the sowing apparatus being a self-propelled sowing apparatus.

In one embodiment of the first aspect of the present invention it is a requirement that in respect of one or more of said one or more shear carriers said apparatus comprises a spring, such as a pressure spring; said spring being suspended in serial configuration in relation to said actuator.

Hereby is achieved that shear carried being suspended in such a way that the actuator adjusts the tension of the spring load of the shear carrier.

In one embodiment of the first aspect of the present invention it is a requirement that in respect of one or more of said one or more shear carriers, said one or more shears being a drill shear or a disc shear.

Such types of shears are traditionally and conventionally used as shears in sowing apparatuses.

In one embodiment of the first aspect of the present invention, said sensor is not being a sonic or an optical sensor for remote sensing a distance.

In the present description and in the appended claims the term "remote sensing a distance" shall be interpreted as a situation in which a sensor senses a distance through the air. Hence, the term "remote sensing a distance" implies that the distance is sensed by the sensor without "touching".

In one embodiment of the first aspect of the present invention said sensor is not being an optical sensor or a sonic sensor.

In one embodiment of the first aspect of the present invention said sensor is not being an optical sensor or a sonic sensor for sensing a distance from said sensor to the surface of the ground.

In one embodiment of the first aspect of the present invention said sensor is not being an optical sensor or a sonic sensor, such as an ultrasound sensor or an infrared sensor.

In one embodiment of the first aspect of the present invention it is a requirement that in respect of one or more of said one or more shear carriers, preferably all said shear carriers, said control unit is configured to dynamically regulating said output signal for controlling said actuator, solely in response to the output signal originating from said sensor.

In one embodiment of this embodiment of the first aspect of the present invention it is a requirement that in respect of one or more of said one or more shear carriers, preferably all said shear carriers, said control unit is configured to dynamically regulating said output signal for controlling said actuator; without receiving input from any other type of sensor as defined above.

These embodiments avoids the disadvantages associated with using optical or sonic sensors for sensing a distance of a frame of a sowing apparatus over the ground as set out in the introduction of the present application.

In the present description and the appended claims the term "dynamically regulating" shall be interpreted as a repeatedly adjustment of the position of the shear carrier in relation to the frame based on the position of the shear carrier as detected by the sensor.

Accordingly the term "dynamically regulating" is different from an initial setting of the control unit relating to a desired "basis depth" which in turn in most situations will be a single adjustment of the control unit and relating to a specific species of crop.

The second aspect of the present invention

The present invention relates in a second aspect to the use of a sowing apparatus according to the first aspect for sowing seeds.

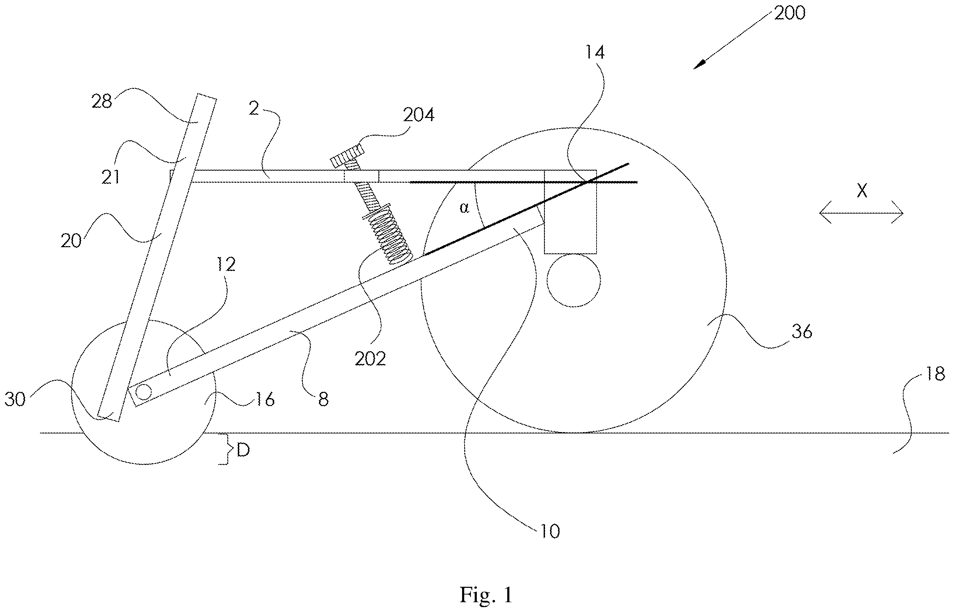

Referring now in details to the drawings for the purpose of illustrating preferred embodiments of the present invention, fig. 1 illustrates schematically the principle of a prior art sowing apparatus. Fig. 1 shows the prior art sowing apparatus 200 comprising a frame 2 to be towed along a longitudinal direction X at a towing part (not shown in fig. 1). The frame is suspended on wheels or carrier rollers 36 which allow the frame to follow the surface of the soil 18 when being towed. On the frame 2 is pivotally suspended a shear carrier 8 having a first end 10 and a second end 12. The shear carrier is suspended onto the frame 2 at its first end 10 in a suspension 14. At the second end 12 of the shear carrier 8 is rotably mounted a shear 16. The shear carrier 8 is in relation to the frame 2 subjected to the action of a spring 202 which will force the shear carrier 8 downward in relation to the frame 2 by pivoting in the suspension 14. A spring tensioner 204 allows for adjusting the tension of the spring 202, thus resulting in varying the force with which the shear carrier 8 is forced downward, and thus varying the force with which the shear 16 is forced into the soil. This feature in turn results in allowing adjustment of the depth of the shear furrow, and thus ultimately the depth at which the seeds will be sowed. The seeds to be sown originates from a seed hopper (not shown in fig. 1) and passed a seed dispensing device 34 (also not shown in fig. 1) before it is allowed to be guided into the soil via seed conveying means 20 in the form of a pipe 21 having an inlet opening 28 at an upper part and an outlet opening 30 at a lower part.

As it can easily be contemplated from the schematically outline of the principle of the prior art sowing apparatus of fig. 1, the apparatus when towed in use and upon being set with a predetermined spring tension by adjusting spring tensioner 204, will allow the shear carrier 8 to pivot around the suspension 14 at a varying angle, thus resulting in a varying shear depths D and thus varying sowing depth of the seeds.

Accordingly, the prior art apparatus as outlined in fig. 1 does not provide for optimum sowing depths of seeds, and consequently ultimately results in a non-optimum quantity and quality of harvested crops.

Parameters especially affecting the sowing depths of seeds with the prior art apparatus of fig. 1 are the texture or nature of the ground or soil, such as type of soil (e.g. soil constituents like clay, sand, gravel), moisture content of soil, presence of plant residues in the soil, presence of rocks in the soil.

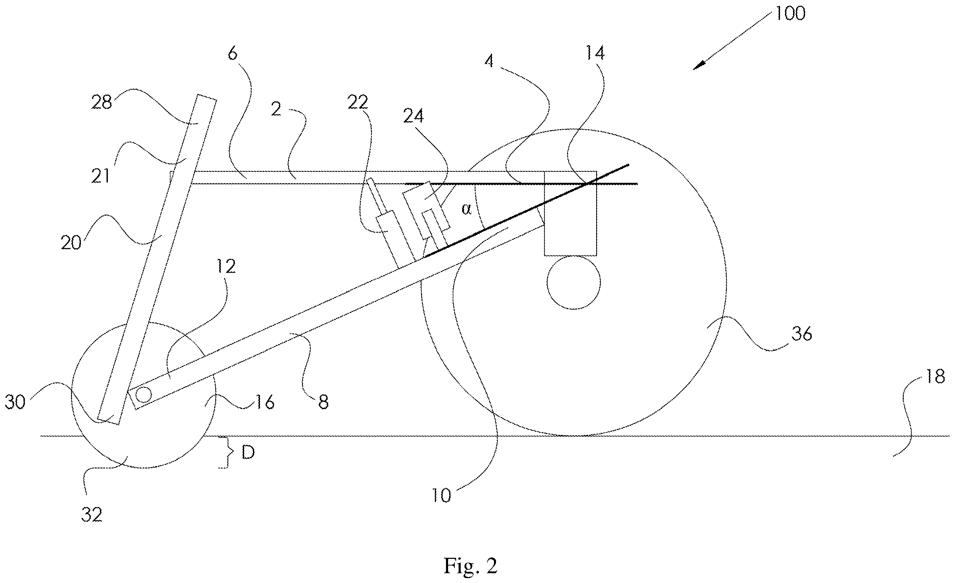

The disadvantages of the prior art sowing apparatus of fig. 1 has been overcome with a sowing apparatus according to the present invention. Such an apparatus is shown in fig. 2.

Fig. 2 illustrates a sowing apparatus 100 according to a first aspect of the present invention. The sowing apparatus 100 comprising a frame 2 to be towed along a longitudinal direction X at a towing part (not shown in fig. 2). The frame is suspended on wheels or carrier rollers 36 which allow the frame to follow the surface of the soil 1 8 when being towed. On the frame 2 is pivotally suspended a shear carrier 8 having a first end 10 and a second end 12. The shear carrier is suspended onto the frame 2 at its first end 10 in a suspension 14. At the second end 12 of the shear carrier 8 is rotably mounted a shear 16.

The seeds to be sown originates from a seed hopper (not shown in fig. 2) and passed a seed dispensing device 34 (also not shown in fig. 2) before it is allowed to be guided into the soil via seed conveying means 20 in the form of a pipe 21 having an inlet opening 28 at an upper part and an outlet opening 30 at a lower part.

Seed hoppers and seed dispensers suitable for use in the present invention are readily available on the marked and are thoroughly disclosed in the prior art. Examples of such devises may be found by reference to the producers Kvernland Accord, Pöttinger, Kongskilde, Kuhn and Lemken.

Between the shear carrier 8 and the frame 2 is arranged a sensor 22, sensing the angle $\alpha$ between the shear carrier 8 and the frame 2. Alternatively, the sensor 22 may be configured for sensing not an angular displacement but rather a translational displacement between the shear carrier 8 and the frame 2. Also arranged between shear carrier 8 and the frame 2 is an actuator 24 for actuating or asserting a force between the shear carrier 8 and the frame 2. Such actuation will result in moving the pivotally suspended shear carrier 8 in relation to the frame 2 by rotational movement in the suspension 14. Accordingly, by means of the actuator 24, the shear carrier 8 may be lifted upward in a direction away from the ground or soil; or may be forced downward in a direction towards the ground or soil, thereby altering the angle $\alpha$ between the shear carrier 8 and the frame 2. The actuator 24 may e.g. be a hydraulic actuator, an electrical actuator or a mechanical actuator.

In this way the depth D of the shear furrow created by the shear 16 may be adjusted. Accordingly, ultimately this allows for adjustment of the depth at which the seeds will be sown.

The sowing apparatus according to the first aspect also comprises a control unit 26 (not shown in fig. 2). The control unit 26 is configured to receive input signal originating from the sensor 22. Furthermore, the control unit is configured to send instruction signals to the actuator.

Preferably, the control unit 26 comprises means, such as a data storage medium, comprising a computer program which provides instructions as to how the actuator 24 must react on the basis of input signals received form the sensor 22.

Preferably, the control unit 26 comprises input means for allowing an operator to input data relating to the desired behavior of the actuator 24 in response to signals received form the sensor 22. Such input means may be in the form of a keyboard. Additionally, the control unit 26 may include a monitor or the like for allowing an operator to monitor the settings of the control unit and/or the operation of the seeding apparatus.

In this way, the control unit 26 may be configured to receive instructions relating to a desired basis-depth of sowing, thus corresponding to a desired basis-position of the actuator relative to the frame. The term "basis depth" shall in the present description and in the appended claims be construed to mean a predetermined sowing depth of a specific crop species which has shown to be optimum in respect of that crop species.

The sensor 22 and the actuator 24 may be in the form of an integrated unit 38. Such integrated units are commercially available. Accordingly, the producer Büter manufactures hydraulic cylinders with build in electronic sensors.

Whether being separate units or an integrated unit it is desired that the actuator 24 is being suspended between the 2 frame and the shear carrier 8 in series with a spring, such as a pressure spring for providing a spring loaded shear carried in such a way that actuator 24 adjusts the tension of the spring load of the shear carrier.

In fig. 2 only principles of the sowing apparatus according to the first aspect of the invention have been depicted. It should be noted, however, that while fig. 2 only illustrates a sowing apparatus having one shear carrier 8 and one shear 16 and one seed conveying means 20, it will easily be contemplated that the inventive apparatus may comprise a number of such shear carriers, shears and seed conveying means. Such shear carriers, shears and seed conveying means will typically be arranged "in-line" in a transverse direction Y, perpendicular to the intended direction of movement of the sowing apparatus. For example, the inventive sowing apparatus may comprise 5 - 180 or more, such as 10 - 175, e.g. 15 - 170, such as 20 - 165, e.g. 25 - 160, such as 30 - 155, e.g. 35 - 150, such as 40 - 145, such as 45 - 140, for example 50 - 135 or 55 - 130, such as 60 - 125, e.g. 65 - 120, such as 70 - 115, e.g. 75 - 110, for example 80 - 105, such as 85 - 100, such as 90 - 95 shear carriers. Each shear carrier may comprise one, two or three or even more shears. The number of seed conveying means may typically be identical to the number of shears.

Accordingly, the inventive sowing apparatus as outlined in fig. 2 allows for providing optimum sowing depths of seeds, because the sensor 22 and the actuator 24 constantly will be sensing the depth of the shear and subsequently and immediately thereafter dynamically adjust the depth of the shear if that depth is deviating from a predetermined and desired depth of sowing, such as a "basis depth".

Consequently, the inventive sowing apparatus provides for optimum quantity and quality of harvested crops. This is not at least the case when using the inventive sowing apparatus in soil having a varying texture or nature as to content, such as sand, clay, rocks, plant residues etc.

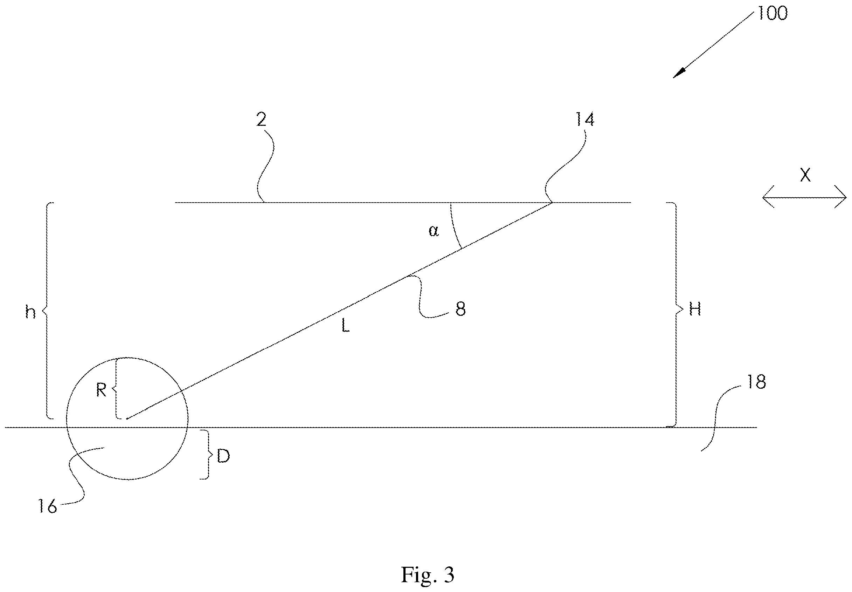

Fig. 3 illustrates the trigonometry involved in converting the angle α between the frame 2 and the shear carrier 8 as outlined in fig. 2, to a sowing depth D.

Fig. 3 illustrates in a simplified way the frame part 2 of the sowing apparatus according to the first aspect of the present invention. The frame part 2 is oriented in a horizontal direction parallel to the longitudinal direction of the intended movement of the apparatus during use.

On the frame part 2 is in suspension 14 pivotally suspended the shear carrier 8 having the length L (between the pivot point 14 and the mounting point of the shear). The frame part 2 and its pivot point 14 is arranged at a height H above the surface of the ground.

The radius of the shear is R, and the shear is at the angle α between the frame 2 and the shear carrier 8 submerged the distance D into the soil.

One easily deduces that:

$$h = L \times \sin(\alpha);$$

and

$$h + R = H + D;$$

which gives the correlation:

$$D = L \times \sin(\alpha) + R - H;$$

h being the vertical distance from the pivot point of the shear carrier to the mounting point of the shear.

Accordingly, knowing the radius R of the shear 16; the effective length L of the shear carrier 8; the height H above ground of the frame part 2 (or its pivot point 14); and the measured or sensed angle α, allow one to calculate the sowing depth D.

These parameters may accordingly be useful in programming or setting the control unit 26 in order to obtain an optimum sowing depth.

In fig. 1, 2 and 3, the shear is depicted as a disc-type shear. However, any other type of conventional and/or traditional shear may be used with the sowing apparatus according to the first aspect of the present invention.

Above only a few embodiments of the invention have been described, however, it can easily be envisaged that several other embodiments are possible within the scope of the invention as defined in the claims.

**List of reference numerals**

| 2 | Frame of sowing apparatus |
| 4 | Front end of frame |
| 6 | Rear end of frame |
| 8 | Shear carrier |
| 10 | First end of shear carrier |
| 12 | Second end of shear carrier |
| 14 | Suspension of shear carrier |
| 16 | Shear |
| 18 | Soil |
| 20 | Seed conveying means |
| 21 | Tube or pipe |
| 22 | Sensor |
| 24 | Actuator |
| 26 | Control unit |
| 28 | Inlet opening of tube or pipe |
| 30 | Outlet opening of tube or pipe |
| 32 | Rear part of shear |
| 34 | Seed dispensing device |
| 36 | Wheel or carrier roller of sowing apparatus |
| 38 | Integrated sensor/actuator |
| 40 | Input device |
| h | Vertical distance from pivot point of shear carrier to the mounting point of shear. |
| H | Height above ground of pivotally suspension of shear carrier |
| R | Radius of shear |
| L | Effective length L of shear carrier |
| D | Depth of shear furrow |
| α | Sensed angle between shear carrier and frame part |
| 100 | Sowing apparatus according to the present invention |
| 200 | Prior art sowing apparatus |
| 202 | Spring |
| 204 | Spring tensioner |

**Claims**

1. A sowing apparatus (100), said sowing apparatus comprising:

a frame (2) comprising a front end (4) and a rear end (6), as seen in relation of the intended direction of movement; said intended direction of movement defining a longitudinal direction (X) of the apparatus; wherein said frame is having an extension in a transverse direction (Y), said transverse direction being perpendicular to the longitudinal direction (X); said frame comprising one or more shear carriers (8), said shear carriers each having a first end (10) and a second end (12);

said one or more shear carriers (8) at its first end being pivotally suspended onto said frame in a suspension (14);

wherein said shear carrier at its second end (12) comprises one or more shears (16) adapted to be at least partially submerged into the soil (18);

wherein in respect of one or more of said one or more shear carriers (8), said frame comprises seed conveying means (20) for conveying seeds into the soil at a position corresponding to one or more of said one or more shears; wherein in respect of one or more of said one or more shear carriers (8), said apparatus comprises a sensor (22) for detecting the position of said shear carrier in relation to the frame; said sensor (22) being configured to provide an output signal representing a sensed position of said shear carrier (8); wherein in respect of one or more of said one or more shear carriers said apparatus comprises an actuator (24) for altering the position of the shear carrier in relation to the frame; wherein said apparatus comprises a control unit configured to receive said output signal from said sensor; wherein said control unit is configured to provide an output signal for controlling said actuator; wherein said control unit is connected to an input device (40), said input device being configured to allow an operator to provide said control unit with instruction relating to the desired response of the actuator, based the input signal of said sensor.

2. A sowing apparatus according to claim 1, wherein in respect of one or more of said one or more shear carriers (8), said seed conveying means (20) for conveying seeds into the soil at a position corresponding to one or more of said one or more shears comprises a tube or pipe (21) having an extension in a vertical direction from an inlet opening (28) thereof to an outlet opening (30) thereof, said outlet opening (30) being arranged below said inlet opening (28); and/or wherein in respect of one or more of said one or more shear carriers (8) said seed conveying means (20) for conveying seeds into the soil at a position corresponding to one or more of said one or more shears are configured to conveying seeds into the soil at a position corresponding a rear part (32) of one or more of said one or more shears.

3. A sowing apparatus according to claim 1 or 2, wherein in respect of one or more of said one or more shear carriers (8) said seed conveying means (20) for conveying seeds into the soil at a position corresponding to one or more of said one or more shears is connected to a seed dispensing device for dispensing seeds at a predetermined intervals.

4. A sowing apparatus according to any of the claims 1 - 3, wherein said frame (2) comprises one or more wheels or carrier rollers (36) for providing support for said frame when towing the apparatus.

5. A sowing apparatus according to any of the claims 1 - 4, wherein said sensor (22) and said actuator (24)

is an integrated unit; and/or wherein said sensor (22) being a sensor configured to sense a translational displacement; or wherein said sensor being a sensor configured to sense an angular displacement.

6. A sowing apparatus according to any of the claims 1 - 5, wherein said control unit is configured to receive instructions relating to a desired basis-depth of sowing, thus corresponding to a desired basis-position of the actuator relative to the frame.

7. A sowing apparatus according to any of the claims 1 - 6, wherein the number of shear carriers (8) is 5-180, preferably 10 - 175, preferably 15-170, preferably 20 - 165, preferably 25 - 160, preferably 30 - 155, preferably 35 - 150, preferably 40 - 145, preferably 45 - 140, preferably 50 - 135 or 55-130, preferably 60 - 125, preferably 65 - 120, preferably 70 - 115, preferably 75 - 110, preferably 80 - 105, preferably 85 - 100, preferably 90 - 95.

8. A sowing apparatus according to any of the claims 1-7, wherein in respect of one or more of said one or more shear carriers (8) said shear carrier comprises one, two or three or more shears.

9. A sowing apparatus according to any of the claims 1 - 8, wherein said sowing apparatus being configured to be towed behind a tractor or the like; or wherein said sowing apparatus being a self-propelled sowing apparatus.

10. A sowing apparatus according to any of the claims 1 - 9, wherein in respect of one or more of said one or more shear carriers said apparatus comprises a spring, such as a pressure spring; said spring being suspended in serial configuration in relation to said actuator (24).

11. A sowing apparatus according to any of the claims 1 - 10, wherein in respect of one or more of said one or more shear carriers, said one or more shears being a drill shear or a disc shear.

12. A sowing apparatus according to any of the claims 1 - 11, wherein said sensor is not a sensor for remote sensing a distance; and/or wherein said sensor is not an optical sensor or a sonic sensor and/or wherein said sensor is not an optical or sonic sensor for sensing a distance from said sensor to the surface of the ground; and/or wherein said sensor is not an optical sensor or a sonic sensor, such as an ultrasound sensor or an infrared sensor.

13. A sowing apparatus according to any of the claims 1 - 12, wherein in respect of one or more of said one or more shear carriers, preferably all said shear carriers, said control unit is configured to dynamically regulating said output signal for controlling said actuator, solely in response to the output signal originating from said sensor (22).

14. A sowing apparatus according to claim 13, wherein in respect of one or more of said one or more shear carriers, preferably all said shear carriers, said control unit is configured to dynamically regulating said output signal for controlling said actuator; without receiving input from any sensor as defined in claim 12.

15. Use of a sowing apparatus (100) according to any of the claims 1 - 14 for sowing seeds.

**Patentansprüche**

1. Sävorrichtung (100), wobei die Sävorrichtung umfasst:

einen Rahmen (2), der ein vorderes Ende (4) und ein hinteres Ende (6) umfasst, in Bezug auf die beabsichtigte Bewegungsrichtung gesehen; die beabsichtigte Bewegungsrichtung definiert eine Längsrichtung (X) der Vorrichtung; wobei der Rahmen eine Ausdehnung in einer Querrichtung (Y) aufweist, wobei die Querrichtung senkrecht zu der Längsrichtung (X) ist; wobei der Rahmen einen oder mehrere Scherträger (8) umfasst, wobei die Scherträger jeweils ein erstes Ende (10) und ein zweites Ende (12) aufweisen; wobei der eine oder die mehreren Scherträger (8) an ihrem ersten Ende schwenkbar an dem Rahmen in einer Aufhängung (14) aufgehängt sind; wobei der Scherträger an seinem zweiten Ende (12) eine oder mehrere Scheren (16) umfasst, die so angepasst sind, dass sie zumindest teilweise in den Boden (18) eingetaucht sind; wobei in Bezug auf einem oder mehreren der einen oder mehreren Scherträger (8) der Rahmen Samenfördermittel (20) zur Beförderung von Samen in den Boden an einer Position, die einer oder mehreren der einen oder mehreren Scheren entspricht, umfasst; wobei in Bezug auf einem oder mehreren der einen oder mehreren Scherträger (8), die Vorrichtung einen Sensor (22) zur Erfassung der Position des Scherträgers in Bezug auf den Rahmen umfasst; wobei der Sensor (22) konfiguriert ist, um ein Ausgangssignal zu liefern, das eine erfasste Position des Scherträgers (8) darstellt; wobei in Bezug auf einem oder mehreren der einen oder mehreren Scherträger, die Vorrichtung einen Stellenantrieb (24) zum Ändern der Position des Scherträgers in Bezug auf den Rahmen umfasst;

wobei die Vorrichtung eine Steuereinheit umfasst, die konfiguriert ist, um das Ausgangssignal von dem Sensor zu empfangen; wobei die Steuereinheit konfiguriert ist, um ein Ausgangssignal zur Steuerung des Stellenantriebs bereitzustellen; wobei die Steuereinheit mit einer Eingabevorrichtung (40) verbunden ist, wobei die Eingabevorrichtung konfiguriert ist, um es einem Bediener zu ermöglichen, der Steuereinheit basierend auf dem Eingabesignal des Sensors Anweisungen bezüglich der gewünschten Reaktion des Stellenantriebs bereitzustellen.

2. Sävorrichtung nach Anspruch 1, wobei in Bezug auf einem oder mehreren der einen oder mehreren Scherträger (8) das Samenfördermittel (20) zur Förderung von Samen in den Boden an einer gegebenen Position zu einer oder mehreren der einen oder mehreren Scheren ein Rohr oder eine Röhre (21) mit einer Ausdehnung in einer vertikalen Richtung von einer Einlassöffnung (28) zu einer Auslassöffnung (30) umfasst, wobei die Auslassöffnung (30) unterhalb der Einlassöffnung (28) angeordnet ist; und/oder wobei in Bezug auf einem oder mehreren der einen oder mehreren Scherträger (8), das Samenfördermittel (20) zur Förderung von Samen im Boden an einer Position entsprechend einer oder mehreren der einen oder mehreren Scheren zur Förderung von Samen in den Boden an einer Position entsprechend dem hinteren Teil (32) von einer oder mehreren der einen oder mehreren Scheren konfiguriert ist.

3. Sävorrichtung nach Anspruch 1 oder 2, wobei in Bezug auf einem oder mehreren der einen oder mehreren Scherträger (8), das Samenfördermittel (20) zur Förderung von Samen in dem Boden an einer Position, die einer oder mehreren der einen oder mehreren Scheren entspricht, mit einer Samenausgabevorrichtung zur Ausgabe von Samen in vorbestimmten Intervallen verbunden ist.

4. Sävorrichtung nach einem der Ansprüche 1 bis 3, wobei der Rahmen (2) ein oder mehrere Räder oder Trägerrollen (36) zur Bereitstellung einer Stütze für den Rahmen beim Ziehen der Vorrichtung umfasst.

5. Sävorrichtung nach einem der Ansprüche 1 bis 4, wobei der Sensor (22) und der Stellantrieb (24) eine integrierte Einheit sind; und/oder wobei der Sensor (22) ein Sensor ist, der konfiguriert ist, um eine Translationsverschiebung zu erfassen; oder wobei der Sensor ein Sensor ist, der konfiguriert ist, um eine Winkelverschiebung zu erfassen.

6. Sävorrichtung nach einem der Ansprüche 1 bis 5, wobei die Steuereinheit konfiguriert ist, um Anweisungen in Bezug auf eine gewünschte Saatgrundtiefe zu empfangen, die somit einer gewünschten Grundposition des Stellenantriebs relativ zu dem Rahmen entspricht.

7. Sävorrichtung nach einem der Ansprüche 1 bis 6, wobei die Anzahl der Scherträger (8) 5-180, vorzugsweise 10-175, vorzugsweise 15-170, vorzugsweise 20-165, vorzugsweise 25-160, vorzugsweise 30-155, vorzugsweise 35-150, vorzugsweise 40-145, vorzugsweise 45-140, vorzugsweise 50-135 oder 55-130, vorzugsweise 60-125, vorzugsweise 65-120, vorzugsweise 70-115, vorzugsweise 75-110, vorzugsweise 80-105, vorzugsweise 85-100, vorzugsweise 90-95 beträgt.

8. Sävorrichtung nach einem der Ansprüche 1 bis 7, wobei in Bezug auf einem oder mehreren der einen oder mehreren Scherträger (8), der Scherträger eine, zwei oder drei oder mehr Scheren umfasst.

9. Sävorrichtung nach einem der Ansprüche 1 bis 8, wobei die Sävorrichtung dazu konfiguriert ist, hinter einem Traktor oder dergleichen gezogen zu werden; oder wobei die Sävorrichtung eine selbstfahrende Sävorrichtung ist.

10. Sävorrichtung nach einem der Ansprüche 1 bis 9, wobei in Bezug auf einem oder mehreren der einen oder mehreren Scherträger die Vorrichtung eine Feder umfasst, wie etwa eine Druckfeder; wobei die Feder in serieller Konfiguration in Bezug auf den Stellenantrieb (24) aufgehängt ist.

11. Sävorrichtung nach einem der Ansprüche 1 bis 10, wobei in Bezug auf einem oder mehreren der einen oder mehreren Scherträger, die eine oder mehreren Scheren eine Bohrschere oder eine Scheibenschere sind.

12. Sävorrichtung nach einem der Ansprüche 1 bis 11, wobei der Sensor kein Sensor zur Fernerkundung einer Entfernung ist; und/oder wobei der Sensor kein optischer Sensor oder ein Schallsensor ist und/oder wobei der Sensor kein optischer oder Schallsensor zum Erfassen einer Entfernung von dem Sensor zu der Oberfläche des Bodens ist; und/oder wobei der Sensor kein optischer Sensor oder ein Schallsensor wie etwa ein Ultraschallsensor oder ein Infrarotsensor ist.

13. Sävorrichtung nach einem der Ansprüche 1 bis 12, wobei in Bezug auf einem oder mehreren der einen oder mehreren Scherträger, vorzugsweise aller Scherträger, die Steuereinheit konfiguriert ist, das Ausgangssignal zur Steuerung des Stellenantriebs nur als Reaktion auf das von diesem Sensor (22) stammende Ausgangssignal dynamisch zu regeln.

14. Sävorrichtung nach Anspruch 13, wobei in Bezug auf einem oder mehreren der einen oder mehreren Scherträger, vorzugsweise aller Scherträger, die Steuereinheit zur dynamischen Regelung des Ausgangssignals zur Steuerung des Stellenantriebs konfiguriert ist; ohne Eingabe von irgendeinem Sensor zu empfangen, wie in Anspruch 12 definiert.

15. Verwendung einer Sävorrichtung (100) nach einem der Ansprüche 1 bis 14 zum Säen von Samen.

## Revendications

1. Appareil d'ensemencement (100), ledit appareil d'ensemencement comprenant :

une structure (2) comprenant une extrémité avant (4) et une extrémité arrière (6), comme on peut le voir par rapport à la direction de mouvement recherchée, ladite direction de mouvement recherchée définissant une direction longitudinale (X) de l'appareil ; dans lequel ladite structure possède une étendue dans une direction transversale (Y), ladite direction transversale étant perpendiculaire à la direction longitudinale (X) ;

ladite structure comprenant un ou plusieurs supports de cisailles (8), lesdits supports de cisailles possédant chacun une première extrémité (10) et une seconde extrémité (12) ;

lesdits un ou plusieurs supports de cisailles (8) à leur première extrémité étant suspendus en pivotement à ladite structure dans une suspension (14) ;

dans lequel ledit support de cisaille à sa seconde extrémité (12) comprend une ou plusieurs cisailles (16) conçues pour être immergées au moins en partie dans le sol (18) ;

dans lequel, par rapport à un ou plusieurs desdits un ou plusieurs supports de cisailles (8), ladite structure comprend des moyens d'acheminement de semences (20) pour acheminer des semences dans le sol à un endroit correspondant à une ou plusieurs desdites une ou plusieurs cisailles ;

dans lequel, par rapport à un ou plusieurs desdits un ou plusieurs supports de cisailles (8), ledit appareil comprend un capteur (22) pour détecter la position dudit support de cisaille par rapport à la structure, ledit capteur (22) étant configuré pour émettre un signal de sortie représentant un endroit détecté dudit support de cisaille (8) ;

dans lequel, par rapport à un ou plusieurs desdits un ou plusieurs supports de cisailles, ledit appareil comprend un actionneur (24) pour modifier la position du support de cisaille par rapport à la structure ;

dans lequel ledit appareil comprend une unité de commande configurée pour recevoir ledit signal de sortie émis par ledit capteur ;

dans lequel ladite unité de commande est configurée pour émettre un signal de sortie pour la commande dudit actionneur ;

dans lequel ladite unité de commande est reliée à un dispositif d'entrée (40), ledit dispositif d'entrée étant configuré pour permettre à un opérateur de fournir à ladite unité de commande des instructions concernant la réponse désirée de l'actionneur en se basant sur le signal d'entrée dudit capteur.

2. Appareil d'ensemencement selon la revendication 1, dans lequel, par rapport à un ou plusieurs desdits un ou plusieurs supports de cisailles (8), ledit moyen d'acheminement de semences (20) pour acheminer des semences dans le sol à un endroit correspondant à une ou plusieurs desdites une ou plusieurs cisailles comprend un tube ou un tuyau (21) possédant une étendue dans une direction verticale à partir d'une ouverture d'entrée (28) de ce dernier jusqu'à une ouverture de sortie (30) de ce dernier, ladite ouverture de sortie (30) étant disposée en dessous de ladite ouverture d'entrée (28) ; et/ou

dans lequel, par rapport à un ou plusieurs desdits un ou plusieurs supports de cisailles (8), lesdits moyens d'acheminement de semences (20) pour acheminer des semences dans le sol à un endroit correspondant à une ou plusieurs desdites une ou plusieurs cisailles sont configurés pour acheminer des semences dans le sol à un endroit correspondant à une partie arrière (32) d'une ou plusieurs desdites une ou plusieurs cisailles.

3. Appareil d'ensemencement selon la revendication 1 ou 2, dans lequel, par rapport à un ou plusieurs desdits un ou plusieurs supports de cisailles (8), ledit moyen d'acheminement de semences (20) pour acheminer des semences dans le sol à un endroit correspondant à une ou plusieurs desdites une ou plusieurs cisailles est relié à un dispositif de distribution de semences pour distribuer des semences à des intervalles prédéterminés.

4. Appareil d'ensemencement selon l'une quelconque des revendications 1 à 3, dans lequel ladite structure (2) comprend une ou plusieurs roues ou rouleaux de support (36) pour conférer un support à ladite structure lorsque l'appareil est tracté.

5. Appareil d'ensemencement selon l'une quelconque des revendications 1 à 4, dans lequel ledit capteur (22) et ledit actionneur (24) sont réalisés en une seule pièce ; et/ou dans lequel ledit capteur (22) est un capteur configuré pour détecter un déplacement en translation ; ou dans lequel ledit capteur est un capteur configuré pour détecter un déplacement angulaire.

6. Appareil d'ensemencement selon l'une quelconque des revendications 1 à 5, dans lequel ladite unité de commande est configurée pour recevoir des instructions concernant une profondeur désirée de base d'ensemencement, correspondant ainsi à une position de base désirée de l'actionneur par rapport à la structure.

7. Appareil d'ensemencement selon l'une quelconque des revendications 1 à 6, dans lequel le nombre de supports de cisailles (8) est de 5 à 180, de préférence de 10 à 175, de préférence de 15 à 170, de préférence de 20 à 165, de préférence de 25 à 160, de préférence de 30 à 155, de préférence de 35 à 150, de préférence de 40 à 145, de préférence de 45 à 140, de préférence de 50 à 135 ou de 55 à 130, de préférence de 60 à 125, de préférence de 65 à 120, de préférence de 70 à 115, de préférence de 75 à 110, de préférence de 80 à 105, de préférence de 85 à 100, de préférence de 90 à 95.

8. Appareil d'ensemencement selon l'une quelconque des revendications 1 à 7, dans lequel, par rapport à un ou plusieurs desdits un ou plusieurs supports de cisailles (8), ledit support de cisaille comprend une, deux ou trois cisailles ou plus.

9. Appareil d'ensemencement selon l'une quelconque des revendications 1 à 8, dans lequel ledit appareil d'ensemencement est configuré pour être tracté derrière un tracteur ou analogue ; ou dans lequel ledit appareil d'ensemencement est un appareil d'ensemencement autopropulsé.

10. Appareil d'ensemencement selon l'une quelconque des revendications 1 à 9, dans lequel par rapport à un ou plusieurs desdits un ou plusieurs supports de cisailles, ledit appareil comprend un ressort tel qu'un ressort de pression, ledit ressort étant suspendu dans une configuration en série par rapport audit actionneur (24).

11. Appareil d'ensemencement selon l'une quelconque des revendications 1 à 10, dans lequel par rapport à un ou plusieurs desdits un ou plusieurs supports de cisailles, lesdites une ou plusieurs cisailles représentent une cisaille en forme de foret ou une cisaille en forme de disque.

12. Appareil d'ensemencement selon l'une quelconque des revendications 1 à 11, dans lequel ledit capteur n'est pas un capteur pour la télédétection d'une distance ; et/ou dans lequel ledit capteur n'est pas un capteur optique ou un capteur acoustique et/ou dans lequel ledit capteur n'est pas un capteur optique ou un capteur acoustique pour détecter une distance à partir dudit capteur jusqu'à la surface du sol ; et/ou dans lequel ledit capteur n'est pas un capteur optique ou un capteur acoustique, tel qu'un capteur à ultrason ou un capteur à infrarouge.

**13.** Appareil d'ensemencement selon l'une quelconque des revendications 1 à 12, dans lequel par rapport à un ou plusieurs desdits un ou plusieurs supports de cisailles, de préférence à la totalité desdits supports de cisailles, ladite unité de commande est configurée pour réguler de manière dynamique ledit signal de sortie pour la commande dudit actionneur, uniquement en réponse au signal de sortie émanant dudit capteur (22).

**14.** Appareil d'ensemencement selon la revendication 13, dans lequel par rapport à un ou plusieurs desdits un ou plusieurs supports de cisailles, de préférence à la totalité desdits supports de cisailles, ladite unité de commande est configurée pour réguler de manière dynamique ledit signal de sortie pour la commande dudit actionneur, sans la réception d'une entrée à partir d'un quelconque capteur comme défini à la revendication 12.

**15.** Utilisation d'un appareil d'ensemencement (100) selon l'une quelconque des revendications 1 à 14, pour ensemencer des semences.

Fig. 1

Fig. 2

EP 3 139 725 B1

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0177024 A2
- WO 2014066654 A1

- US 20110247843 A1